# EUROPÄISCHE PATENTANMELDUNG

(11) **EP 1 477 791 A2**
(43) Veröffentlichungstag der Anmeldung: **17.11.2004**
(21) Anmeldenummer: 04010165.1
(22) Anmeldetag: 29.04.2004
(51) Int. Cl.: G01N 1/12

(54) **Vorrichtung und Verfahren zur Probenahme von Suspensionen**

(30) Priorität: 12.05.2003 DE 10321150
(71) Anmelder: H.C. Starck GmbH, 38642 Goslar (DE)
(72) Erfinder: Strittmatter, Wilfried, 79725 Laufenburg (DE); Meisel, Rainer-Leo, Dr., 79725 Laufenburg (DE); Häusel, Paul, 79618 Rheinfelden (DE)
(74) Vertreter: Peters, Frank M., Dr.

(57) **Zusammenfassung**

Vorrichtung zur Entnahme repräsentativer Proben aus Suspensionen, wobei ein rohrförmiges Gehäuse (1) an einem Ende mit einem Gewinde (2) mit Drehgriff (3) und am anderen Ende mit einer rohrförmigen Hülse (5), deren Länge mindestens der Füllhöhe der Suspension, aus der eine Probe entnommen werden soll, entspricht, versehen ist, wobei das Gewinde (2) eine Dichtung (4) aufweist, mittels der die Hülse (5) an dem dem Gehäuse (1) zugewandten Ende dicht verschlossen werden kann und Verfahren zur Entnahme repräsentativer Proben aus Suspensionen unter Verwendung dieser Vorrichtung.

## Beschreibung

Die Erfindung betrifft eine Vorrichtung und ein Verfahren zur Entnahme repräsentativer Proben von Suspensionen aus diese enthaltenden Behältern.

Für den Transport von Suspensionen werden diese in der Regel in geeignete Behälter, beispielsweise Fässer abgefüllt. Beim Transport oder der Lagerung der Behälter kann es zu einem teilweise Absinken der Feststoffteilchen in der Flüssigkeit kommen, so dass die Konzentration des Feststoffs im Behälter von oben nach unten zunimmt. Oftmals ist am Boden des Behälters sogar die Bildung von Sediment zu beobachten. Dies ist beispielsweise beim Transport von Katalysatoren der Fall, wobei der Katalysator in einer Flüssigkeit suspendiert und anschließend in Fässer verfüllt wird. Die Entnahme repräsentativer Suspensionsproben aus den transportfertigen Katalysatorgebinden ist beispielsweise zur Bestimmung chemischer Kennwerte notwendig. Ist die entnommene Probe nicht repräsentativ, kommt es bei der Bestimmung der Kennwerte zu verfälschten Ergebnissen. Entscheidend ist hierbei, dass das Feststoff/Flüssigkeitsverhältnis in der Probe und im Gebinde identisch ist.

Die Entnahme von Proben durch einfaches Schöpfen oder mittels saugender oder hebender Pumpverfahren führt nur dann zur Gewinnung repräsentativer Proben, wenn die Konzentration an Feststoff an jeder Stelle der Suspension identisch ist. Wie oben ausgeführt ist dies jedoch oftmals nicht der Fall. Insbesondere zur Entnahme von Suspensionsproben aus transportfähigen Katalysatorgebinden sind solche Vorgehensweisen daher nicht geeignet.

Aufgabe der vorliegenden Erfindung ist es, eine Vorrichtung zur Entnahme von repräsentativen Proben aus Suspensionen zur Verfügung zu stellen.

Die Aufgabe wird durch eine Vorrichtung gemäß Anspruch 1 gelöst.

Gegenstand der Erfindung ist daher eine Vorrichtung zur Entnahme repräsentativer Proben aus Suspensionen, wobei ein rohrförmiges Gehäuse an einem Ende mit einem Gewinde mit Drehgriff und am anderen Ende mit einer rohrförmigen Hülse, deren Länge mindestens der Füllhöhe der Suspension, aus der eine Probe entnommen werden soll, entspricht, versehen ist, wobei das Gewinde eine Dichtung aufweist, mittels der die Hülse an dem dem Gehäuse zugewandten Ende dicht verschlossen werden kann.

Die erfindungsgemäße Vorrichtung erlaubt die Entnahme von repräsentativen Proben aus Suspensionen. Als repräsentative Proben im Sinne dieser Erfindung sind solche Proben zu verstehen, deren Zusammensetzung hinsichtlich des Volumenverhältnisses von Flüssigkeit zu Feststoff der Zusammensetzung der untersuchten Suspension entspricht. Besteht die flüssige und/oder die feste Phase aus mehreren Komponenten, so entsprechen die relativen Anteile der repräsentativen Probe den relativen Anteilen in der untersuchten Suspension.

Die Vorrichtung zeichnet sich zudem durch eine überraschend einfache Bauweise und Handhabung aus. Besonders vorteilhaft ist es, dass die Bauweise der Vorrichtung das Entnehmen von Proben durch das Spundloch von Fässern erlaubt, das Öffnen des Fassdeckels zur Probenahme ist daher nicht erforderlich.

Vorzugsweise weist die rohrförmige Hülse eine Länge auf, die der Füllhöhe der Suspension, aus der eine Probe entnommen werden soll, entspricht.

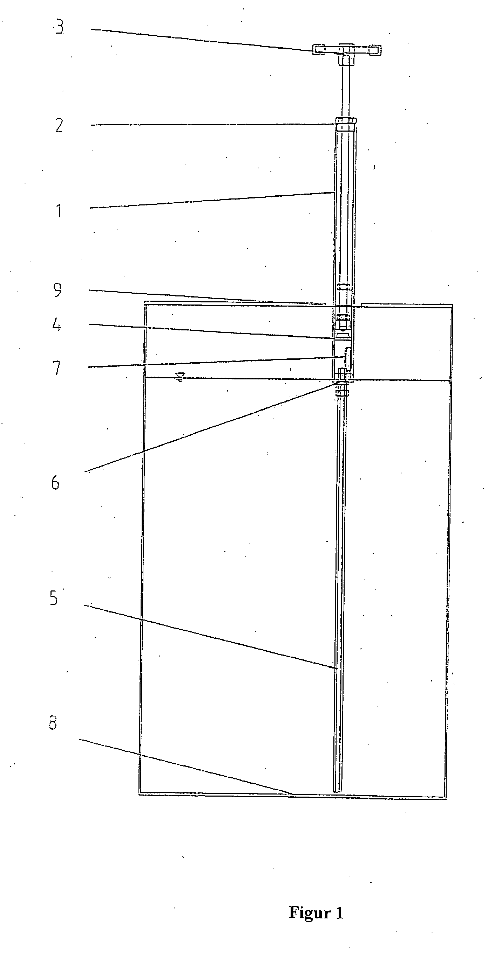

Die erfindungsgemäße Vorrichtung wird im Folgenden anhand der Figur 1 weiter erläutert, wobei die Figur nicht einschränkend zu verstehen ist, sondern beispielhaft eine besondere Ausführungsform wiedergibt.

Fig. 1 zeigt einen Längsschnitt durch die erfindungsgemäße Vorrichtung bei der Probennahme durch das Spundloch eines Fasses.

Die in Fig. 1 dargestellte Ausführungsform der erfindungsgemäßen Vorrichtung zur Entnahme repräsentativer Proben aus Suspensionen enthält ein rohrförmiges Gehäuse (1), das an einem Ende mit einem Gewinde (2) mit Drehgriff (3) und am anderen Ende mit einer rohrförmigen Hülse (5), deren Länge mindestens der Füllhöhe der Suspension, aus der eine Probe entnommen werden soll, entspricht, versehen ist. Die Hülse (5) ist rohrförmig ausgebildet, d.h. an beiden Enden offen. Das Gewinde (2) weist eine Dichtung (4) auf, mittels der die Hülse (5) an dem dem Gehäuse (1) zugewandten Ende dicht verschlossen werden kann.

Hülse (5) und Gehäuse (1) können einstückig ausgebildet sein. Dabei können beide Teile aus einem Rohr herausgearbeitet werden oder zunächst separat hergestellt und anschließend durch Verschweißen, Verkleben oder Verpressen fest miteinander verbunden werden.

Vorzugsweise sind Hülse (5) und Gehäuse (1) jedoch zweistückig ausgebildet, wobei die Hülse (5) über eine Verschraubung (6) lösbar am Gehäuse (1) befestigt wird. Auf diese Weise können sehr einfach Hülsen (5) verschiedener Länge gegeneinander ausgetauscht werden, was das Anpassen der Vorrichtung an verschiedene Fass- oder Füllhöhen erlaubt.

Vorzugsweise weist die Hülse (5) eine Länge auf, die der Füllhöhe der Suspension, aus der eine Probe entnommen werden soll, entspricht. Lediglich beispielhaft sei hier eine Länge von 10 cm bis 100 cm genannt, wobei je nach Einsatzzweck deutlich längere oder kürzere Hülsen (5) zum Einsatz kommen können.

Die Länge des Gehäuses (1) ist nicht kritisch. Es muss lediglich gewährleistet sein, dass das Gehäuse (1) das Gewinde (2) und die Dichtung (4) aufnehmen kann und dass ein Öffnen und Schließen der Dichtung (4) möglich ist. Beispielsweise kann das Gehäuse (1) eine Länge von 35 bis 45 cm aufweisen.

Die Durchmesser von Gehäuse (1) und Hülse (5) sind so zu wählen, dass das Gehäuse (1) eine Dichtung (4) von ausreichender Größe aufnehmen kann, so dass ein dichter Abschluss der Hülse (5) gewährleistet ist. Der Innendurchmesser des Gehäuses (1) ist daher größer als der Innendurchmesser der Hülse (5). Der Innendurchmesser der Hülse (5) muss groß genug sein, so dass ein genügend großes Volumen zur Probeaufnahme zur Verfügung steht, darf aber andererseits nicht zu groß gewählt werden, da sonst die Gefahr besteht, dass ein Teil der Probe bei oder nach der Probenahme ungewollt aus der Hülse (5) ausströmt. Wie der Innendurchmesser der Hülse (5) zu wählen ist, hängt insbesondere von der Art und Viskosität der Suspension ab, aus der eine Probe entnommen werden soll. Innendurchmesser von 0,9 bis 1,9 cm sind in der Regel geeignet.

Vorzugsweise wird der Durchmesser von Gehäuse (1) und Hülse (5) so gewählt, dass der maximale Außendurchmesser kleiner ist als der Durchmesser des Spundloches eines Fasses, in dem üblicherweise die zu untersuchende Suspension transportiert und gelagert wird. Der Außendurchmesser des Gehäuses (1) beträgt daher beispielsweise 3,5 bis 5 cm, der Außendurchmesser der Hülse (5) beispielsweise 1 bis 2 cm.

Die mit der Suspension in Berührung kommenden Teile der erfindungsgemäßen Vorrichtung bestehen zweckmäßigerweise aus einem gegenüber dieser Suspension inerten Werkstoff.

Gehäuse (1) und Hülse (5) bestehen beispielsweise aus Stahl, vorzugsweise aus Edelstahl.

Beim Eintauchen der erfindungsgemäßen Vorrichtung in eine Suspension strömt die Suspension von unten in die rohrförmige, d.h. unten offene Hülse (5). Dabei muss die in der Hülse (5) vorhandene Luft nach oben entweichen können. Dies kann beispielsweise dadurch geschehen, dass das Gewinde (2) mit Drehgriff (3) und Dichtung (4) vor dem Eintauchen der Vorrichtung in die Suspension vollständig aus dem Gehäuse (1) entfernt und erst nach dem Eintauchen wieder eingeschraubt wird. Vorzugsweise weist das Gehäuse (1) jedoch mindestens eine Öffnung (7) auf, durch die bei geöffneter Dichtung (4) die in der Hülse (5) vorhandene Luft ausströmen kann. Insbesondere bevorzugt ist die Öffnung (7) auf Höhe des dem Gehäuse (1) zugewandten Endes der Hülse (5) angebracht.

Die Dichtung (4) kann direkt am Gewinde (2) befestigt sein. Es sind jedoch auch andere Varianten möglich. Beispielsweise kann die Dichtung (4) über eine Kolbenstange mit dem Gewinde (2) verbunden sein.

Die Dichtung (4) kann aus üblichen Dichtmaterialien bestehen, beispielsweise aus Gummi, Teflon oder Silicon. Vorzugsweise besteht die Dichtung (4) aus Teflon.

Gegenstand der Erfindung ist weiterhin ein Verfahren zur Gewinnung repräsentativer Proben von Suspensionen mittels der erfindungsgemäßen Vorrichtung, wobei mittels Drehgriff (3) die Dichtung (4) geöffnet und die Vorrichtung von oben in die Suspension, aus der eine Probe entnommen werden soll, getaucht wird, bis die Hülse (5) mit dem dem Gehäuse (1) abgewandten Ende den Boden des die Suspension enthaltenden Behälters erreicht. Dabei strömt die Probe von unten in die unten offene rohrförmige Hülse (5). Anschließend wird mittels Drehgriff (3) die Dichtung (4) geschlossen und die Vorrichtung aus der Suspension herausgezogen.

Vorzugsweise wird die Vorrichtung im rechten Winkel zum Boden des Behälters in die Suspension getaucht.

Um die mittels der Vorrichtung entnommene Probe in einen geeigneten Behälter umzufüllen, wird die Dichtung (4) wieder geöffnet, die Suspensions-Probe kann herausfließen.

Um das umständliche Öffnen des Fassdeckels zu vermeiden, erfolgt die Probeentnahme vorzugsweise durch das Spundloch des Fasses.

Fig. 1 zeigt schematisch den Einsatz der erfindungsgemäßen Vorrichtung. Die Vorrichtung taucht zur Probenahme durch das Spundloch (9) eines Fasses (8) so in eine Suspension ein, dass die Hülse (5) den Fassboden berührt.

## Patentansprüche

1. Vorrichtung zur Entnahme repräsentativer Proben aus Suspensionen, **dadurch gekennzeichnet, dass** ein rohrförmiges Gehäuse (1) an einem Ende mit einem Gewinde (2) mit Drehgriff (3) und am anderen Ende mit einer rohrförmigen Hülse (5), deren Länge mindestens der Füllhöhe der Suspension, aus der eine Probe entnommen werden soll, entspricht, versehen ist, wobei das Gewinde (2) eine Dichtung (4) aufweist, mittels der die Hülse (5) an dem dem Gehäuse (1) zugewandten Ende dicht verschlossen werden kann.

2. Vorrichtung nach Anspruch 1, **dadurch gekennzeichnet, dass** die Hülse (5) lösbar über eine Verschraubung (6) am Gehäuse (1) befestigt ist.

3. Vorrichtung nach einem der Ansprüche 1 bis 2, **dadurch gekennzeichnet, dass** die Dichtung (4) über eine Kolbenstange mit dem Gewinde (2) verbunden ist.

4. Vorrichtung nach einem der Ansprüche 1 bis 3, **dadurch gekennzeichnet, dass** die Dichtung (4) aus Gummi oder Silicon besteht.

5. Vorrichtung nach einem der Ansprüche 1 bis 4, **dadurch gekennzeichnet, dass** das Gehäuse (1) und die Hülse (5) aus Edelstahl besteht.

6. Vorrichtung nach einem der Ansprüche 1 bis 5, **dadurch gekennzeichnet, dass** die Hülse (5) eine Länge aufweist, die der Füllhöhe der Suspension, aus der eine Probe entnommen werden soll, entspricht.

7. Verfahren zur Entnahme repräsentativer Proben aus Suspensionen mittels einer Vorrichtung nach einem der Ansprüche 1 bis 6, **dadurch gekennzeichnet, dass** mittels Drehgriff (3) die Dichtung (4) geöffnet und die Vorrichtung so in die Suspension, aus der eine Probe entnommen werden soll, getaucht wird, dass die Hülse (5) mit dem dem Gehäuse (1) abgewandten Ende den Boden des die Suspension enthaltenden Behälters erreicht, anschließend mittels Drehgriff (3) die Dichtung (4) geschlossen und die Vorrichtung aus der Suspension herausgezogen wird.
